Europäisches Patentamt

European Patent Office

Office européen des brevets

(19)

(11) EP 0 915 573 A2

(12) **EUROPEAN PATENT APPLICATION**

(43) Date of publication:
**12.05.1999 Bulletin 1999/19**

(51) Int Cl.$^6$: **H04B 1/707**, H04L 27/20

(21) Application number: **98308785.9**

(22) Date of filing: **27.10.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.11.1997 US 966265**

(71) Applicant: **LUCENT TECHNOLOGIES INC.**
**Murray Hill, New Jersey 07974-0636 (US)**

(72) Inventors:
• **MacLellan, John Austin**
  **Freehold, New Jersey 07728 (US)**
• **Shober, Anthony R.**
  **Red Bank, New Jersey 07701 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(54) **Direct sequence spread spectrum modulated uplink for modulated backscatter systems**

(57) A modulated backscatter (MBS) system provides a processing gain over MBS background noise by using a wideband uplink signal and a narrowband downlink signal. The wideband uplink signal is generated by controlling the reflection of a narrowband downlink signal using a wideband data signal. The wideband data signal is generated by modulating a pseudo random signal with an information signal, where the chip rate of the pseudo random signal is higher than the bit or symbol rate of the information signal.

## Description

### Related Applications

This application is related to commonly assigned U.S. Patent Applications Ser. No. 08/775694, filed December 31, 1996, entitled "QPSK Modulated Backscattering System" and Ser. No. 08/571004, filed December 12, 1995, entitled "Enhanced Uplink Modulated Backscatter System."

### Field of the Invention

This invention relates to wireless communication systems and, more particularly, to using direct sequence spread spectrum modulation of subcarrier frequencies in a modulated backscatter communication system.

### Background of the Invention

Radio Frequency Identification (RFID) systems are used for identification and/or tracking of equipment, inventory, or living things. RFID systems are radio communication systems that communicate between a radio transceiver, called an Interrogator, and a number of inexpensive devices called Tags. The objectives of RFID systems are to design a reliable and secure architecture, and to minimize the total cost of the Interrogator and the Tags, while meeting the system performance requirements. In RFID systems, the Interrogator communicates to the Tags using modulated radio signals, and the Tags respond with modulated radio signals. The Interrogator first transmits an amplitude modulated signal to the Tag. Then, the Interrogator transmits a Continuous-Wave (CW) radio signal to the Tag. The CW radio signal can be a Frequency Hopping (FH) carrier, thereby enhancing the Tag's ability to operate in a multipath environments. The Tag then modulates the CW signal using Modulated BackScattering (MBS) where the antenna is electrically switched, by the Tag's modulating signal, from being an absorber of RF radiation to being a reflector of RF radiation; thereby encoding the Tag's information onto the CW radio signal. The Interrogator demodulates the incoming modulated radio signal and decodes the Tag's information message. MBS systems typically utilize amplitude modulated techniques for communications from the Interrogator to the Tag (downlink). For Tag to Interrogator (uplink) communications, prior art maintains the use of narrow band modulation techniques for uplink communications. Prior art also maintains baseband homodyne detection of the MBS signal at the Interrogator. To increase the probability of successful data transmission, the Tag may modulate the reflection coefficient at a rate higher than that of the data rate thereby producing a modulated subcarrier signal on top of the CW RF signal.

In theory, subcarrier modulation has the inherent advantage that the received waveform, after mixing with the CW RF signal, produces a signal above the DC noise of the homodyne detector, and away from the phase noise of the CW local oscillator. However, many objects local either to the Tag or the basestation will reflect the CW RF signal back to the basestation's receiver, and in the case where moving machinery is present, MBS background noise at subcarrier frequencies up to a few megahertz are produced. Moving machinery may include: motors, generators, pumps, and fans. These machines are common to industrial environments such as a factory floor. Moving metallic devices will modulate an incident RF wave at a frequency related to the rotation or vibration of the machine.

Prior art has also used Direct Sequence Spreading of the CW radio signal transmitted by the Interrogator; however, many MBS noise generators will modulate the spread CW radio signal, which will be despread by the detector, and will be received as MBS noise as in the narrowband case, by the homodyne detector. Therefore, neither Frequency Hopping nor Direct Sequence Spreading of the CW radio signal offer advantages over MBS background noise.

### Summary of the Invention

An embodiment of the present invention provides an MBS system with a processing gain over MBS background noise by using a wideband uplink signal and a narrowband downlink signal where a narrowband signal is a non-spread spectrum signal. The wideband uplink signal is generated by controlling the reflection of a narrowband downlink signal using a wideband data signal. The wideband data signal is generated by modulating a pseudo random signal with an information or data signal, where the chip rate of the pseudo random signal is higher than the data rate of the data signal and where the data rate may be, for example, a bit rate or a symbol rate.

An embodiment of the present invention improves packet capture when multiple Tags simultaneously access an uplink time slot of a TDMA (Time Division Multiple Access) system by Direct Sequence Spreading of the uplink signal. In a Direct Sequence Spread Spectrum TDMA system, the probability that two Tags accessing the same time slot will have the same chip phase is small (or intentionally designed to be small), therefore a correlator receiver tracking one chip phase can still demodulate one uplink burst if multiple Tags access a single TDMA slot.

In accordance with the present invention, a duplex radio communication system comprises an Interrogator which generates a first modulated signal by modulating a first information signal onto a radio carrier signal. The Interrogator transmits the first modulated signal to at least one remote Tag of the system. The remote Tag receives and processes the received first modulated signal. The Tag generates a Pseudo-random Noise (PN) subcarrier signal, and in one embodiment, Phase Shift Key modulates a second information signal onto this subcarrier thereby generating a pseudo random subcarrier signal. The modulation method can be either amplitude, frequency, or phase modulation of any complexity; or a hybrid combination of amplitude, frequency and/or phase modulation. A Backscatter Modulator using this pseudo random subcarrier signal modulates the reflection of the first modulated signal, the reflected signal being a second modulated signal. It should be noted that the pseudo random subcarrier signal may also be used to modulate a reflection of the unmodulated CW radio signal. The Interrogator receives and demodulates the second modulated signal to obtain the second information signal. In one embodiment, demodulation utilizes a homodyne detector and the first modulated signal as the local oscillator source for the homodyne detector. The Interrogator mixes the incoming modulated waveform with the local source producing both In-phase and Quadrature pseudo random subcarrier signals which are bandpass filtered at the subcarrier frequency, and input to a digital demodulator. The digital demodulator reproduces the second information signal modulated by the pseudo random subcarrier frequency. The present invention allows a MBS application to operate in an environment where MBS background noise is present, i. e., an industrial or military environment. The present invention also allows multiple Tags in a Direct Sequence Spread Spectrum TDMA system, using an Interrogator with multiple N correlator receivers, each tracking one chip phase, to demodulate N Tags accessing a single TDMA slot.

## Brief Description of the Drawing

FIG. 1 is a block diagram of an illustrative Radio Frequency Identification (RFID) system;
FIG. 2 is a block diagram of an illustrative Interrogator Unit used in the RFID system of FIG. 1;
FIG. 3 is a block diagram of a Tag Unit used in the RFID system of FIG. 1;
FIG. 4A is a logical diagram of a Tag Unit Modulator Control of FIG. 3;
FIG. 4B is a logical diagram illustrating mixing a modulated pseudo random subcarrier with another subcarrier;
FIG. 5 is a logical diagram of an Interrogator Unit Pseudo Random Noise Subcarrier Demodulator Unit FIG. 2;
FIG. 6 is a logical diagram of a Demodulator Unit Time Acquisition Unit of FIG. 5;
FIG. 7 is a logical diagram of a Demodulator Unit Time Tracking Unit of FIG.5; and
FIG. 8 is a logic diagram of a Gate Array Baseband DBPSK receiver Unit of FIG. 5.

## Detailed Description

One class of RFID applications involves using RFID technology to read information from a Tag affixed to a sensor, container, rack, pallet, or object. In one application, the container is moved across the reading field of an Interrogator. The reading field is defined as that volume of space within which successful communications between the Tag and the Interrogator can take place. While the Tag is in the reading field, the Interrogator and Tag must complete their information exchange before the Tag moves out of the Interrogation field.

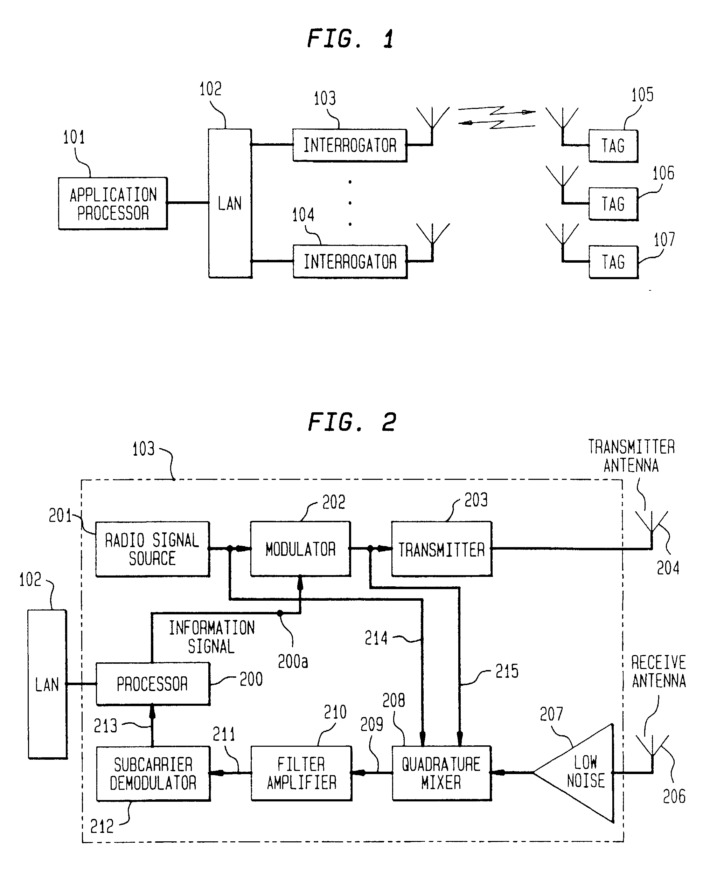

With reference to FIG. 1, there is shown an overall block diagram of an illustrative RFID system useful for describing the application of the present invention. An Application Processor 101 communicates over Local Area Network (LAN) 102 to a plurality of Interrogators 103-104. The Interrogators may then each communicate with one or more of the Tags 105-107. For example, the Interrogator 103 receives an information signal, typically from an Application Processor 101. The Interrogator 103 takes this information signal and Processor 200 (FIG. 2) formats a downlink message (Information Signal 200a) to be sent to the Tag. With joint reference to FIGS. 1 and 2, Radio Signal Source 201 generates a radio signal, the Modulator 202 modulates the Information Signal 200a onto the radio signal, and the Transmitter 203 sends this modulated signal via Antenna 204, illustratively using amplitude modulation, to a Tag; however, other types of modulation may be used, for example, frequency and/or phase modulation. The reason for using amplitude modulation is that the Tag can demodulate such a signal with a single, inexpensive nonlinear device (such as a diode).

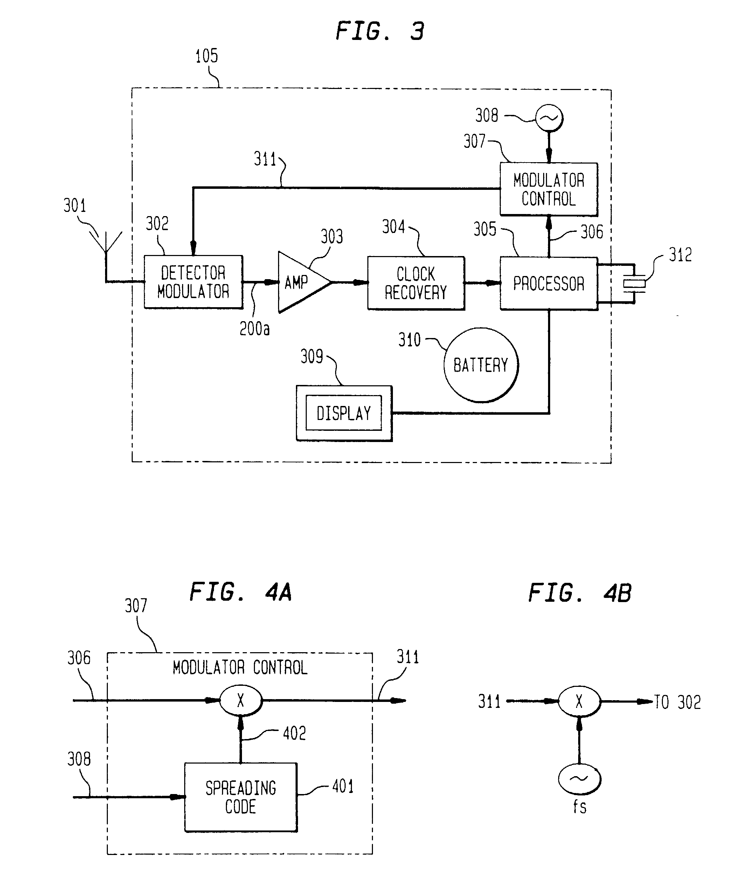

In the Tag 105 (see FIG. 3), the Antenna 301 (for example, a loop or patch antenna) receives the modulated signal. This signal is demodulated, directly to baseband, using the Detector/Modulator 302, which, illustratively, could be a single Schottky diode. The diode should be appropriately biased with the proper current level in order to match the impedance of the diode and the Antenna 301 such that losses of the radio signal are minimized. The result of the diode detector is essentially a demodulation of the incoming signal directly to baseband. The Information Signal 200a is then amplified, by Amplifier 303, and synchronization is recovered in Clock and Frame Recovery Circuit 304. The resulting information is sent to a Processor 305. The Processor 305 is typically an inexpensive 4- or 8-bit microprocessor; the Clock Recovery Circuit 304 can be implemented in an ASIC (Applied Specific Integrated Circuit) which works together with Processor 305 or it be implemented in Processor 305's software program. The Processor 305 generates an Information Signal 306 to be sent from the Tag 105 back to the Interrogator (e.g., 103). Information Signal 306 is sent to a Modulator Control Circuit 307 by processor 305 using timing information generated by clock and frame recovery circuit 304. In an embodiment using a TDMA time slot uplink protocol, processor 305 uses clock, frame and time slot information from recovery circuit 304 to ensure that the protocol's frame, time slot and guard time requirements are satisfied. Processor 305 may use interaction from the recovered information signal 200a to determine which frame (or frames) and which time slot (or slots) within a frame should be used to send information signal 306 to the Interrogator. Modulator control circuit 307 uses Information Signal 306 to modulate a pseudo random noise subcarrier generated by the Modulator Control Circuit 307 and driven by Frequency Source 308 to produce signal 311. The Frequency Source 308 may be a crystal oscillator separate from the Processor 305, or it may be a frequency source derived from signals present inside the Processor 305 - such as a divisor of the primary clock frequency of the Processor which is obtained from oscillator 312. The modulated Pseudo random subcarrier Signal 311 is used by Detector/Modulator 302 to modulate the radio carrier signal received from Interrogator 103 to produce a modulated backscatter (e.g., reflected) signal. This is accomplished by switching on and off the Schottky diode using the Pseudo random subcarrier Signal 311, thereby changing the reflectance of Antenna 301. A Battery 310 or other power supply provides power to the circuitry of Tag 105.

## Modulation

There are a variety of techniques for using MBS to send information from the Tag to the Interrogator. In some MBS technologies, the Modulator Control Circuit 307 of the Tag generates an amplitude modulated signal by modulating a CW signal received from the Interrogator with an Information Signal 306 having a frequency $f_2$. If the Radio Signal Source 201 generates a CW frequency $f_c$, then the Interrogator receives signals from the Tag at $f_c$ whose bandwidth is $2f_2$ and filters signals outside of this bandwidth range. This approach could be termed the "MBS at baseband" approach.

Another approach would be for the Tag to generate a subcarrier frequency $f_s$, generated by Frequency Source 308, as shown in FIG. 3. The information could be conveyed using AM (Amplitude Modulation), FSK (Frequency Shift Keying) or PSK (Phase Shift Keying) by modulating the subcarder $f_s$ with the Information Signal 306 having a frequency $f_2$ to create signal 311. In this example, the Interrogator receives signals at $f_c$, whose bandwidth is $2f_2$ but at a frequency $f_s$ away from $f_c$. This method is termed "MBS of a subcarrier." Here we use the approach of generating a pseudo random noise subcarrier 402, at chip rate $f_s$ whose bandwidth is $2f_s$.

When the Tag 105 detects the presence of the Interrogator downlink signal, it responds by transmitting its RFID data preceded by a known preamble that is used for synchronization by the receiver. In one embodiment, and in reference to FIG. 4A, the Tag sends an uplink message to the Interrogator by differentially encoding the uplink data information signal 306 at frequency $f_2$ and BPSK modulates a pseudo random signal 402 to generator signal 311. The pseudo random signal is generated by a maximum length shift register 401, which is clocked at frequency $f_s$ obtained from signal source 308. The resulting pseudo random subcarrier Signal 311 is used by Detector/Modulator 302 to modulate the radio carrier signal received from Interrogator 103 to produce a modulated backscatter (e.g., reflected) signal at the rate of the basestation receivers despreading code rate ($f_s$); thereby sending a second modulated signal back to the Interrogator. The Tag should have a *prior* knowledge of the despreading code and rate; in one embodiment this can information can be transmitted by the information signal 200a. For example, information signal 200a may specify one of several despreading or spreading codes to be used on subsequent communications between the Tag and the Interrogator.

In another embodiment and in reference to FIG. 4B, the Tag generates a subcarrier frequency $f_s$, and mixes the modulated pseudo random subcarrier signal 311 with subcarrier $f_s$, thereby producing a modulated pseudo random noise subcarrier signal. The result of this mixing is used to control the reflectivity of the detector modulator 302, thereby sending a second modulated signal back to the Interrogator.

## Receiver

Returning to FIG. 2, the Interrogator 103 receives the reflected and modulated signal with the Receive Antenna 206, amplifies the signal with a Low Noise Amplifier 207, and demodulates the signal using homodyne detection in a Mixer 208 down to the Intermediate Frequency (IF) of the single subcarder $f_s$. (In some Interrogator designs, a single Transmitter 204 and Receive 206 Antenna is used. In this event, an electronic method of separating the transmitted signal from that received by the receiver chain is needed; this could be accomplished by a device such as a Circulator.) Using the same Radio Signal Source 201 as used in the transmit chain means the demodulation to IF is done using Homodyne detection; this has advantages in that it greatly reduces phase noise in the receiver circuits. It should be noted that modulated signal 215 may be used by Quadrature Mixer 208 to demodulate the signal from amplifier 207 using Homodyne detection. The Mixer 208 then sends a Down Converted Signal 209 -- if using a Quadrature Mixer, it sends both I (in phase) and Q (quadrature) signals -- into Filter/Amplifier 210 to filter and hard limit the Demodulated Signal 209. The resulting filtered signal -- then typically an Information Signal 211 carried on an IF subcarrier -- is then demodulated from the subcarrier in the Subcarrier Demodulator 212, which then sends the Information Signal 213 to Processor 200 to determine the content of the message. The I and Q channels of Signal 209 can be combined in the Filter/Amplifier 210, or in the Subcarrier Demodulator 212, or they could be combined in the Processor 200.

For this receiver configuration any MBS background noise signals will not be despread by 212 and passed along to the processor 200. Therefore, only desired signals arriving at the receiver, modulated by pseudo random noise code at rate $f_s$, will be despread and passed along to the processor 200. Any narrowband signal will be spread in frequency and passed into the processor 200 as additive Gaussian noise. Thus, the desired MBS signal 213 will have the advantage of a processing gain over MBS background noise.

There are several choices for implementing the data recovery in subcarrier demodulator 212: conventional analog I/Q demodulation and envelope detection of the pseudo random subcarrier signal using, e.g., a Costas Loop, Digital Signal Processing (DSP) of the sampled subcarrier, or implementing a receiver in digital logic.

### Demodulation

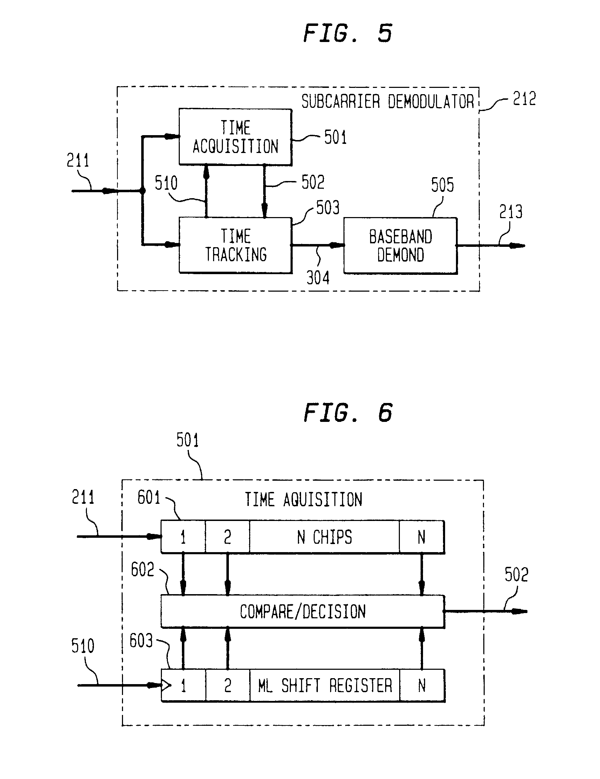

The demodulator 212 may be implemented in Gate Array circuit, illustratively shown in FIG. 5. It has three functions:

1) despread the incoming direct sequence spread spectrum incoming signal;
2) demodulation of the differentially encoded phase shift keyed data (data recovery circuit);
3) deriving the received bit clock for the demodulated data stream (clock recovery circuit).

Timing recovery of the pseudo random sequence chip code is performed in two stages: Timing acquisition and time tracking. The timing acquisition circuit finds where the transmitter is in the PN code sequence. Once the receiver has PN code lock, it acquires bit synch. Once bit synch has been achieved, the receiver then acquires "word" synch, meaning the packet boundaries are found and therefore the meaning of each byte in the packet may be decoded The packet boundaries are defined by the first thirteen bits being a known sequence (e.g., a barker codeword) and the last two bytes being a CRC checksum. Time tracking is the fine adjustment of the receiver pseudo random code sequence generator to maintain lock with the transmitting pseudo random code sequence generator.

The input to the data recovery/demodulator circuit 212 is a hard limited subcarrier 211, which in one embodiment is modulated by differentially encoded BPSK and spread by a maximum length pseudo random bit sequence at chip rate $f_s$. The subcarrier is input to both the timing acquisition unit 501 and the time tracking unit 503. The time acquisition unit 501 is used to find a rough estimate of the present chip code sequence used to spread the subcarrier 211. When the time acquisition unit finds the current chip phase of the subcarrier 211, it alerts the time tracking unit 503 by asserting the Lock signal 502. When the time tracking unit 503 receives the Lock signal 502, it despreads the incoming subcarrier 211 and produces the differentially encoded BPSK information signal 504, which is an estimate of information signal 306. The differentially encode BPSK signal 504 is passed to the Baseband Demodulator Unit 505 which differentially decodes signal 504 and generates the information signal 213.

In reference to FIG. 6, the time acquisition unit 501 receives hard limited subcarrier 211 and samples N chips at frequency rate $f_s$, which are serially shifted into register 601. A locally generated maximum length pseudo random code sequence is generated in register 603 and compared to the data stored in register 601. If a match is detected, then Lock Signal 502 is asserted. If no match is detected, then a new value is generated in register 603. In one embodiment, to achieve timing acquisition a separate correlator receiver section that operates many times faster than transmitting chip rate, using a local pseudo random code sequence generator running at the master clock rate is used to search and find the pseudo random code phase of the current input data stream. For example, the master clock may run well above 100 MHz. In one embodiment, the subcarrier demodulator or baseband receiver is implemented using a FPGA (Field Programmable Gate Array) and, as a result, the correlator receiver sections operational speed is limited by the FPGA's maximum specified clock rate. The timing acquisition circuit only needs to monitor the code symbols used for the preamble bits of the uplink message. If timing acquisition is not achieved by the end of the message preamble bits, the message cannot be properly decoded and will be rejected by the receiver's digital logic. The use of a preamble word is to allow a sufficient number of bits to pass through the receiver to allow the timing recovery circuitry to acquire PN code synch and bit timing synch. In this implementation, the receiver is not looking to find the preamble data. If the receiver acquires synch it will look for the beginning of message code word, usually a barker sequence. If the receiver finds the matching barker word, then it decodes the rest of the packet, defining the meaning of the packet bits and bytes by their offset relationship to the end of the barker word. At the same time the receiver is calculating a CRC checksum over the received packet bits and compares the result to the last two bytes in the packet, which are the transmitted CRC checksum. If they match, the packet is assumed to have been received correctly.

In one implementation, the baseband digital demodulator, including data timing recovery, operate from a 4 MHz clock oscillator driving the master clock of the FPGA. All other clocks and timing inside the FPGA are derived from the master clock. The master clock rate is 80 times greater than the baseband data rate of 50 Kb/s.

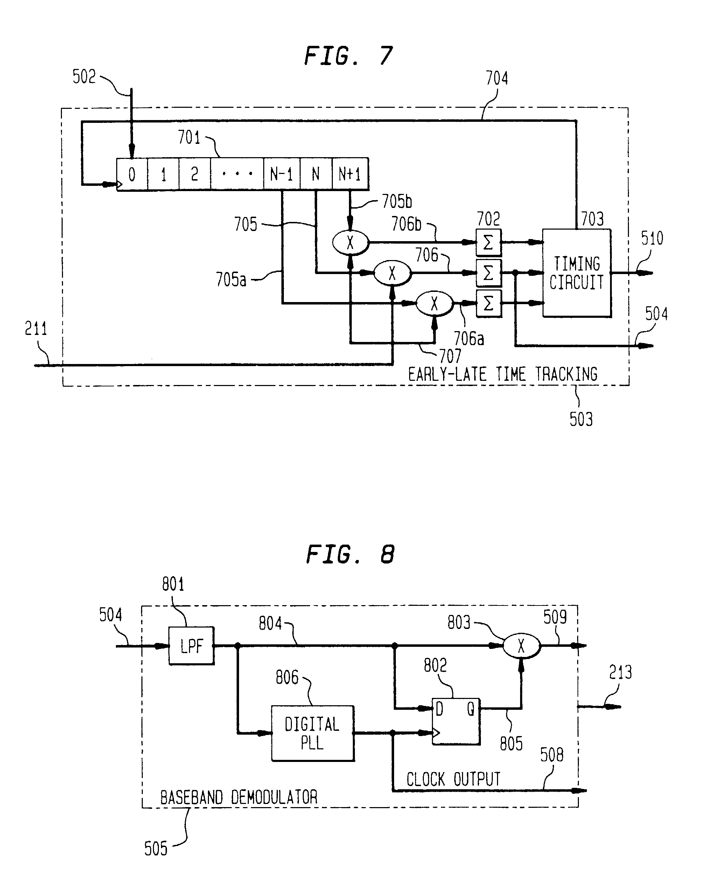

In reference to FIG. 7, the Time Tracking Unit 503, after receiving Lock Signal 502, uses an Early-Late tracking scheme to demodulate the subcarrier 211. In one embodiment the time acquisition circuit 501 loads the state of maximum length pseudo random register 603 into the time tracking maximum length shift register 701 (these could physically be the same register inside a Gate Array). The incoming subcarrier 211 is multiplied by three different time delayed versions of the N chip maximum length shift register 701: a late time version 705a, an early time version 705b and the present time estimate version 705. The three results 706a, 706b, and 706 are input to three correlator match filter detectors 702. The correlator match filter detectors 702 integrate/accumulate, over N samples, the resulting autocorrelation between the subcarrier signal 211 and the input time delayed samples of N chips from maximum length shift register 701. The correlator detector 702 having the maximum output resulting from the three inputs 706a, 706b and 706 is determined to be the correct time reference for the incoming subcarrier signal 211. The Timing Circuit 703 adjusts the clock references 704 and 510 of registers 701 and 603, respectively to maintain chip lock with the incoming subcarrier signal 211.

In reference to FIG. 8, the output decision of the correlator match filters is the differentially encoded BPSK information signal 504, which is a baseband signal at information rate $f_2$. It is Low Pass Filtered in filter 801 and the output 804 is input to a digital phase lock loop circuit 806, which derives the receive clock for the subcarrier demodulation circuit 212. The baseband signal 804 is multiplied by multiplier 803 with a one bit delayed version 805 producing the baseband demodulator output signal 213.

In a Direct Sequence Spread Spectrum TDMA system, the probability that two Tags accessing the same time slot will have the same chip phase is small, therefore a correlator receiver tracking one chip phase can still demodulate one uplink burst.

It should be noted that the processing gain provided may be represented by:

$$PG = Bws/Bwd = N$$

where PG is the processing gain, Bws is the bandwidth of the direct sequence spread spectrum subcarrier signal, Bwd is the bandwidth of the information or data signal, and N is the number of chips per information or data bit.

We further note that a DQPSK (Differential Quadrature Phase Shift Keyed) subcarrier demodulator has the same property as the DBPSK (Differential Binary Phase Shift Keyed) subcarrier demodulator shown in FIG. 4A, in the same manner as above. Thus, extensions to higher order M-order DPSK (Differential Phase Shift Keyed) modulation schemes may be implemented.

What has been described is merely illustrative of the application of the principles of the present invention. Other arrangements and methods can be implemented by those skilled in the art without departing from the spirit and scope of the present invention.

**Claims**

1. A communication system, comprising:

   at least one interrogation station that transmits a narrowband signal; and
   at least one tag that communicates an uplink message to the interrogation station by modulating a reflected signal using a wideband data signal, the reflected signal being a reflection of the narrowband signal and the wideband data signal being a wideband signal modulated by a data signal having a data rate, the wideband signal having a chip rate that is greater than the data rate.

2. The communication system of claim 1, wherein the wideband signal is a pseudo random sequence.

3. The communication system of claim 1, wherein the wideband signal is modulated using phase shift keying, or binary phase shift keying, or differential phase shift keying, or differential quadrature phase shift keying, or differential binary phase shift keying.

4. A communication system, comprising:

   at least one interrogation station that transmits a narrowband signal; and
   at least one tag that communicates an uplink message to the interrogation station by modulating a reflected signal using a wideband subcarrier data signal, the reflected signal being a reflection of the narrowband signal and the wideband subcarrier data signal being a subcarrier signal modulated by a wideband data signal.

5. The communication system of claim 4, wherein the subcarrier signal is a continuous wave signal.

6. The communication system of claim 4, wherein the wideband data signal is a wideband signal modulated by a data signal having a data rate, the wideband signal having a chip rate that is greater than the data rate.

7. The communication system of claim 6, wherein the wideband signal is modulated using phase shift keying.

8. The communication system of claim 1 or 6, wherein the data signal is differentially encoded.

9. The communication system of claim 1 or 4, wherein the narrowband signal is a continuous wave signal, or a modulated continuous wave signal.

10. The communication system of claim 9, wherein the narrowband signal is amplitude modulated, or phase modulated, or frequency modulated.

11. A time division multiple access communication system, comprising:

at least one interrogation station that transmits a narrowband signal, the narrowband signal having a downlink message during at least a first time slot of a frame having a plurality of time slots; and
at least one tag that communicates an uplink message to the interrogation station by modulating a reflected signal using a wideband data signal, the reflected signal being a reflection of the narrowband signal, the uplink message being transmitted during at least a second time slot and the wideband data signal being a wideband signal modulated by a data signal having a data rate, the wideband signal having a known sequence and a chip rate that is greater than the data rate.

12. The communication system of claim 11, wherein the known sequence is specified in the downlink message.

13. The communication system of claim 11, wherein the second time slot is specified in the downlink message.

## FIG. 1

## FIG. 2

## FIG. 3

## FIG. 4A

## FIG. 4B

## FIG. 5

## FIG. 6

## FIG. 7

## FIG. 8